# EUROPEAN PATENT SPECIFICATION

(11) **EP 2 775 166 B1**
(45) Date of publication and mention of the grant of the patent: **10.07.2019**
(21) Application number: 11874866.4
(22) Date of filing: 04.11.2011
(51) Int. Cl.: F16F 15/133, F16D 13/64

(54) **TORSIONAL VIBRATION DAMPING DEVICE**
VORRICHTUNG ZUR DÄMPFUNG VON TORSIONSSCHWINGUNGEN
DISPOSITIF AMORTISSEUR DE VIBRATIONS DE TORSION

(43) Date of publication of application: 10.09.2014
(73) Proprietor: Toyota Jidosha Kabushiki Kaisha, Toyota-shi, Aichi 471-8571 (JP)
(72) Inventor: YAMADA, Masanobu, Toyota-shi Aichi 471-8571 (JP); KATAOKA, Yuki, Toyota-shi Aichi 471-8571 (JP)
(74) Representative: D Young & Co LLP
(86) International application number: PCT/JP2011/006171
(87) International publication number: WO 2013/065092

(56) References cited:
- WO-A1-2011/067815
- JP-A- S57 173 620
- JP-A- 2008 304 008
- JP-U- H0 723 825
- JP-U- S59 180 020

## Description

### TECHNICAL FIELD

The present disclosure relates to a torsional vibration damping device, and in particular to a torsional vibration damping device which is interposed between an internal combustion engine of a vehicle and a drive train system and in which a first rotation member and a second rotation member are connected, for relative rotation therebetween, to each other via an arm member and a resilient member in order for allowing a rotational torque to transmit between the first rotation member and the second rotation member.

### BACKGROUND ART

Conventionally, connecting a driving source such as, for example, an internal combustion engine or an electric motor to wheels or the like has been established by way of a drive train system including, for example, a transmission, thereby transmitting a power from the driving source, via the drive train system, to the wheels. However, in the drive train system connected to the driving source, a rattling noise and a muffled noise generate by a torsional vibration originated from an engine speed change resulting from a torque fluctuation in the internal combustion engine.

The term "rattling noise" is a jangling sound caused when idling gears in transmission gear set get collided caused by a torsional vibration originated from an engine speed change resulting from a torque fluctuation in the internal combustion engine. In addition, the term "muffled noise" is an abnormal noise that is generated in a vehicle compartment caused by a vibration due to a torsional resonance of the drive train system that is originated from the torque fluctuation in the internal combustion engine, and the torsional resonance of the drive train system is usually found in, for example, the steady region.

There has been known a torsional vibration damping device which connects a driving source such as, for example, an internal combustion engine or an electric motor to wheels or the like for transmitting a rotational torque from the driving source and which absorbs a torsional vibration between the driving source and a drive train system including a transmission gear set (See Patent Literature 1, for example).

This torsional vibration damping device includes a cam portion that is provided at its outer circumferential portion with a cam surface whose curvature varies along the circumferential direction, a disc plate that is so arranged in co-axial relationship with the cam portion as to be rotatable relative thereto, and a resilient member that is so provided between the cam portion and the disc plate as to deform resiliently upon relative rotation between the cam portion and the disc plate.

This torsional vibration damping device also includes an arm member which has one end portion that is in contact with the cam surface of the cam portion and the other end portion that is urged by the resilient member, the arm member being so rotated, upon relative rotation between the cam portion and the disc plate, about a rotation fulcrum portion formed on the disc plate, as to deform the resilient member resiliently, resulting in a transmission of the rotational torque between the cam portion and the disc plate.

In this torsional vibration damping device, deforming the resilient member resiliently by a swing movement of the arm member involved in the rotation of the cam portion makes it possible to widen a torsion angle between the cam portion and the disc plate.

For this reason, it is possible to decrease the torsional rigidity between the cam portion and the disc plate as a whole, which makes it possible to attenuate the rattling noise and the muffled noise in sufficient, thereby improving the vibration damping performance.

### PRIOR ART DOCUMENT

### PATENT LITERATURE

Patent Literature 1: WO2011/067815 Publication
JP 2008 304008 A discloses a torque fluctuation absorbing device.

### SUMMARY OF THE DISCLOSURE

Particular aspects of the invention are set out in the appended claims.

### PROBLEM TO BE SOLVED BY THE DISCLOSURE

In such a conventional torsional vibration damping device, the contact pressure between the one end portion of the arm member and the cam surface of the cam portion gets higher upon relative rotation between the cam portion and the disc plate, which may cause abrasion, searing, and the like of a contact region between the one end portion of the arm member and the cam surface. Thus, it is required to lubricate the contact region between the one end portion of the arm member and the cam surface, which leaves a problem to be solved.

The present disclosure been made to overcome the aforementioned conventional problem and therefore an object of the present disclosure is to provide a torsional vibration damping device that is capable of preventing abrasion, searing, and the like of a contact region between one end portion of an arm member and a cam surface by lubricating the contact region between the one end portion of the arm member and the cam surface.

### MEANS FOR SOLVING THE PROBLEM

In order to attain the aforementioned object, a torsional vibration damping device according to the present disclosure includes: a first rotation member; a second rotation member arranged at an radially outward direction from the first rotation member; at least one or more resilient members disposed between the first rotation member and the second member, the at least one or more resilient members being deformed resiliently between the first rotation member and the second member upon relative rotation between the first rotation member and the second rotation member; a cam portion arranged at the radially outward direction from the first rotation member and having a cam surface whose curvature is configured to vary along a circumferential direction; and an arm member having one end portion that is in contact with an outer circumferential portion of the cam portion and the other end portion is urged by the resilient member, the arm member being brought into rotation about a rotation fulcrum formed on the second rotation member to deform resiliently the resilient member upon the relative rotation between the first rotation member and the second rotation member, the arm member allowing for transmission of a rotational torque between the first rotation member and the second rotation member, in which the second rotation member is so arranged at a radially outward peripheral portion of the first rotation member as to surround the resilient member, the arm member, and the cam portion, thereby defining a space in which a lubricant is accommodated between the radially outer peripheral portion of the first rotation member and an axially inner peripheral portion of the second rotation member, a sealing member is interposed between a radially inner peripheral portion of the second rotation member and the radially outer peripheral portion of the second rotation member, and the first rotation member is formed therein with a communication hole for establishing a fluid communication between the space and an outside of the space.

In this torsional vibration damping device, the second rotation member is so arranged at a radially outer peripheral portion of the first rotation member as to surround the resilient member, the arm member, and the cam portion, thereby defining the space in which the lubricant is accommodated between the radially outer peripheral portion of the first rotation member and an axially inner peripheral portion of the second rotation member, and the sealing member is interposed between the radially outer peripheral portion of the first rotation member and the radially inner peripheral portion of the second rotation member.

For this reason, it is possible to supply the lubricant, which is accommodated in the space that is in a hermetically sealed state by the sealing member, to a contact region between the one end portion of the arm member and the cam surface of the cam portion. Thus, it is possible to prevent generations of abrasion, searing, and the like between the one end portion of the arm member and the cam surface.

In addition, the space is held in the fluid-tight state by use of the sealing member, which prevents entry of foreign matter in the space, resulting in that the foreign matter is not allowed to enter the contact region between the one end portion of the arm member and the cam surface of the cam portion, thereby not generating partial abrasion at a sliding region between the one end portion of the arm member and the cam surface.

If the temperature in the space increases, the resulting pressure rise in the space may cause the lubricant to leak from the space. In this torsional vibration damping device according to the preset invention, the first rotation member is formed therein with the communication hole for establishing a fluid communication between the space and the outside of the space, which makes it possible for the space to communicate with an outside thereof i.e., an outside air via the communication hole, thereby establishing a pressure balance between the space and the outside air. Thereby, the pressure in the space is reduced, which will prevent the lubricant from leaking from the space.

Furthermore, due to the fact that when the torsional vibration damping device is brought into rotation, the resulting centrifugal force causes the lubricant to move in the radially outward direction, forming the communication hole in an outside of the radial direction may cause the lubricant to leak from the communication hole.

In the torsional vibration damping device according to the present invention, the communication hole is formed in the first rotation member located at an inside of the radial direction, which makes it possible to prevent surely the lubricant from leaking by centrifugal force from the communication hole. For this reason, it is possible to prevent a decrease of the amount of the lubricant in the space, thereby preventing degradation of the lubricating performance at the contact region between the one end portion of the arm member and the cam surface.

Preferably, the communication hole of the torsional vibration damping device is formed by including a first communication hole and a second communication hole, one end portion of the first communication hole being in fluid communication with the outside of the space, the other end portion of the first communication hole being extended along an axial direction of the first rotation member, one end portion of the second communication hole being in fluid communication with the other end portion of the first communication hole, the second communication hole being open toward a side surface of the cam portion except for the cam surface of the cam portion.

In this torsional vibration damping device, the other portion of the second communication hole is open toward a side surface of the cam portion except for the cam surface of the cam portion, which makes it possible to prevent the other portion of the second communication hole from being closed by the one end portion of the arm member. In addition, in a case of entrance of the lubricant into the second communication hole, the resulting lubricant can be excluded therefrom by the centrifugal force applied to the torsional vibration damping device.

As a result, the fluid communication can be is assured between the space and the outside air, which makes it to prevent a degradation of aeration performance of the inside of the space.

Preferably, the torsional vibration damping device is configured such that the first rotational member is formed at its inner peripheral portion with an inner peripheral spline for engagement with an outer peripheral spline of a shaft member, and a toothless portion is so formed by cutting out some of the spline teeth of either one of the outer peripheral spline and the inner peripheral spline to constitute the first communication hole.

In this torsional vibration damping device, the first communication hole is constituted by the toothless portion which is so formed by cutting out some of the spline teeth of either one of the outer peripheral spline and the inner peripheral spline, which makes it possible to constitute some of the communication hole by utilizing the toothless portion of either one of the outer peripheral spline and the inner peripheral spline.

For this reason, machining the second communication hole to be in fluid communication with the first communication hole can be made with ease, resulting in that it is possible to machine the communication hole in an easy way.

Preferably, the torsional vibration damping device is configured such that the second rotation member is so formed as to include a pair of disc plates, the pair of the disc plates being placed at axially opposite end sides of the cam member, the arm member, and the resilient member, the pair of the disc plates being connected with each other with being spaced in an axial direction, the pair of the disc plates supporting the arm member for rotation via a rotation shaft that constitutes the rotation fulcrum portion, the first rotation member has a boss whose outer peripheral portion has the cam portion, and the seal member is interposed between the radially inner peripheral portion of the pair of the disc plates and a radially outer peripheral portion of the boss.

In this torsional vibration damping device, a space is defined in which a lubricant is accommodated between the radially outer peripheral portion of the boss and the axially inner peripheral portions of the pair of the disc plates and a sealing member is interposed between the radially inner peripheral portions of the pair of the disc plates and the radially outer peripheral portion of the boss, which will prevents a leakage of the lubricant out of the space, thereby supplying the lubricant to the contact region between the one end portion of the arm member and the cam surface.

And, the interposing the sealing member between the radially inner peripheral portions of the pair of the disc plates and the radially outer peripheral portion of the boss, together with the formation of the communication hole in the first rotation member, makes it possible to prevent the lubricant from leaking out of the space even when the pressure in the space increases.

Preferably, the torsional vibration damping device may be configured such that the first rotation member is connected with an input shaft of a transmission involved in a drive transmission system, while the second rotation member is transmitted with a rotational torque of an internal combustion engine.

In this torsional vibration damping device in which the first rotation member is connected with the input shaft of the transmission involved in the drive transmission system, while the second rotation member is transmitted with the rotational torque of the internal combustion engine, the resilient member of low rigidity damps or attenuates the small vibrations, thereby restricting the generation of the rattling noise in an area at which the torsion angle between the first rotation member and the second member is small when the internal combustion engine is idling resulted from the shift change to neutral.

In addition, in an area in which the torsion angle is wide between the first rotation member and the second rotation member, widening the torsion angle between the first rotation member and the second rotation member, which provides a high rigidity torsional characteristics that increases the torque rising rate.

Thus, it is possible to damp the large torsional vibration originated from the engine speed change caused by the torque fluctuation in the internal combustion engine, and the torsional resonance in the drive train system, thereby suppressing the rattling noise caused when idling gears in the transmission gear set get collided and the muffled noise resulted from the torsional resonance in the drive train system.

### EFFECTS OF THE INVENTION

According to the present invention, lubricating the contact region between the one end portion of the arm member and the cam surface makes it possible to prevent abrasion, searing, and the like of a contact region between the one end portion of the arm member and the cam surface.

### BRIEF DESCRIPTION OF THE DRAWINGS

FIG. 1 is a view of a torsional vibration damping device according to an embodiment of the present invention i.e., a perspective view of the torsional vibration damping device, with one of disc plates removed.
FIG. 2 is a view of the torsional vibration damping device according to the embodiment of the present invention i.e., a perspective view of the torsional vibration damping device.
FIG. 3 is a view of the torsional vibration damping device according to the embodiment of the present invention i.e., a front view of the torsional vibration damping device.
FIG. 4 is a view of the torsional vibration damping device according to the embodiment of the present invention i.e., a cross-sectional view of the torsional vibration damping device when viewing from the arrow direction of the A-A line in FIG. 3.
FIG. 5 is a view of the torsional vibration damping device according to the embodiment of the present invention i.e., a front view of the torsional vibration damping device when a cam portion is twisted, relative to the disc plate, an angle of + 45° in a positive side.
FIG. 6 is a view of the torsional vibration damping device according to the embodiment of the present invention i.e., a front view of the torsional vibration damping device when the cam portion is twisted, relative to the disc plate, an angle of + 90° in the positive side.
FIG. 7 is a view of the torsional vibration damping device according to the embodiment of the present invention i.e., a front view of the torsional vibration damping device when the cam portion is twisted, relative to the disc plate, an angle of - 45° in a negative side.
FIG. 8 is a view of the torsional vibration damping device according to the embodiment of the present invention i.e., a view showing a relationship between a torsion angle and torque in the torsional vibration damping device.
FIG. 9 is a view of the torsional vibration damping device according to the embodiment of the present invention i.e., a front view of a boss of the torsional vibration damping device which has a different configuration.

### MODES FOR CARRYING OUT THE INVENTION

Hereinafter, an embodiment of a torsional vibration damping device according to the present invention will be described with reference to the attached drawings.

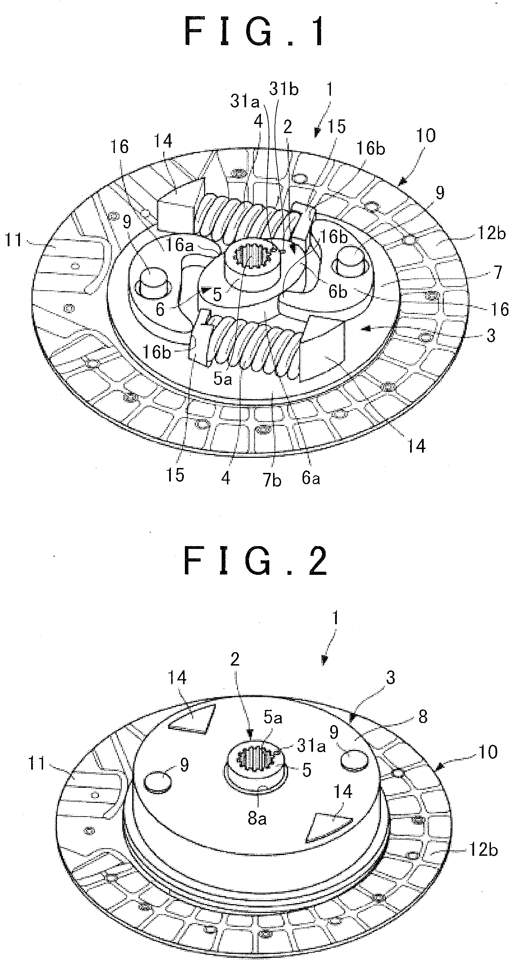

FIG. 1 to FIG. 9 illustrate the embodiment of a torsional vibration damping device according to the present invention.

To being with, an explanation of a configuration will be made.

In FIG. 1 to FIG. 4, a torsional vibration damping device 1 includes a first rotation member 2 and a second rotation member 3 which is arranged at a radially outside of the first rotation member 2 and which shares a common axis with the first rotation member 2.

The second rotation member 3 is configured to be inputted with a rotational torque from an internal combustion engine (not shown) as a driving source, while the first rotation member 2 is configured to transmit the rotational torque from the second rotation member 3 to a transmission of a drive transmission system (not shown).

The torsional vibration damping device 1, which is provided between the first rotation member 2 and the second rotation member 3, includes a pair of coil springs 4 which are deformed resiliently in a circumferential direction of the first rotation member 2 as the resilient member upon relative rotation between the first rotation member 2 and the second rotation member 3.

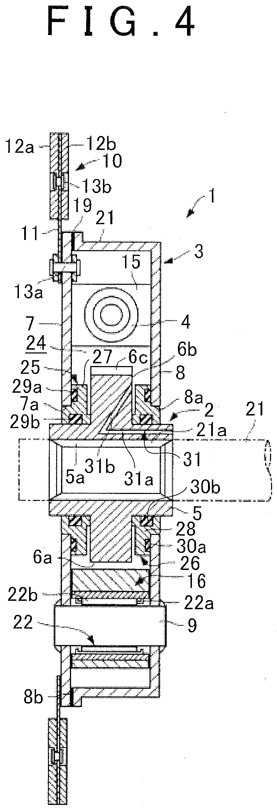

The first rotation member 2 is formed to include a boss 5 having an inner peripheral spline 5a to be in spline engagement with an outer peripheral spline 21a on an input shaft 21 (See FIG. 4) of the transmission in the drive transmission system and a cam portion 6 which is arranged on a radially outer circumferential portion of the boss 5 and which has a cam surface 6a whose curvature varies in a circumferential direction. It is to be noted that, in the present embodiment, the input shaft 21 constitutes a shaft member.

It is also to be noted that the boss 5 and the cam portion 6 may be formed separately. It is also possible to establish a spline engagement between the boss 5 and the cam portion 6 by forming the boss 5 and the cam portion 6 as separate members and by forming spline portions on an outer peripheral portion of the boss 5 and inner peripheral portion of the cam portion 6, respectively.

In addition, the second rotation member 3 includes a pair of disc plates 7, 8 and a clutch disc 10. The disc plates 7, 8 are arranged at opposite end sides of the cam portion 6, respectively, in an axis line direction are in an axially spaced relationship, and are connect to a rotation shaft 9 which acts as a rotation fulcrum portion. It is to be noted that the axial direction means an axial direction of the torsional vibration damping device 1 and is in coincidence with the axial direction of the input shaft 21.

Axially opposite end portions of the rotation shaft 9 which bridges the disc plates 7, 8 are formed as large diameters, respectively, thereby preventing the disc plates 7, 8 under locked connecting state from slipping off Thereby, the disc plates 7, 8 are integrated with each other by the rotation shaft 9 for unitary rotation.

In addition, the boss 5 is accommodated in both circular-shaped central holes 7a, 8a of the disc plates 7, 8 and is arranged in coaxial alignment with the disc plates 7, 8.

In addition, the clutch disc 10 is arranged at a radial outside of the disc plate 7 and includes a cushioning plate 11 and friction materials 12a, 12b. The cushioning plate 11 is in the form of a wavy shape in its thickness direction and is fixed to the disc plate 7 by rivets 13a.

The friction materials 12a, 12b, which are fixed to opposite surfaces of the cushioning plates 11 by rivets 13b, is placed between a flywheel (not shown) that is fixed to a crankshaft of the internal combustion engine and a pressure plate of a clutch cover that is fixed by bolts to the flywheel.

And, the friction materials 12a, 12b are brought into frictional engagement with the flywheel and the pressure plate, respectively, by being urged by the pressure plate, thereby inputting the rotational torque of the internal combustion engine to the disc plates 7, 8.

In addition, when a clutch pedal (not shown) is depressed, the pressure plate is released from its urging action on the friction materials 12a, 12b, which moves the friction materials 12a, 12b away from the flywheel, thereby stopping the input of the rotational torque to the disc plates 7, 8.

Furthermore, the disc plate 7 is provided with a pedestal 14 as a supporting portion, and this pedestal 14 extends from the disc plate 7 in the axial direction to connect with the disc plate 8.

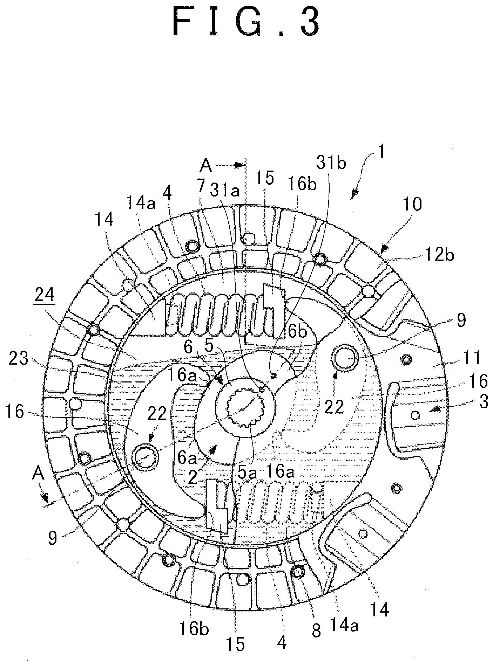

As shown in FIG. 3, the pedestal 14 has a projection portion 14a that extends therefrom and this projection portion 14a is fitted in the other end portion in an extending direction, of the coil spring 4. In addition, at one end portion in the extending direction of the coil spring 4, there is provided a spring seat 15.

In addition, each of arm members 16 is provided between the coil spring 4 and the cam portion 6, is placed between the disc plates 7, 8, and is so supported by the rotation shaft 9 via a needle bearing 22 as to rotate freely.

As shown in FIG. 4, the needle bearing 22 is made up of an outer race 22a mounted to the arm member 16 and a needle-shaped needle 22b interposed between the outer race 22a and the rotation shaft 9, which allows the outer race 22a to rotate freely relative to the rotation shaft 9 via the needle-shaped needle 22b.

One end portion 16a of the arm member 16 is in contact with the cam surface 6a of the cam portion 6, while the other end portion 16b of the arm member 16 is urged in the clockwise direction by being abutted with the coil spring 4 via the spring seat 15.

The cam surface 6a of the cam portion 6 according to the present embodiment is formed into an elliptical shape. The curvature of the cam surface 6a gets larger and larger as the torsion angle between the disc plates 7, 8 and the cam portion 6 gets wider and wider from an initial position of the cam portion when the torsion angle of the between the disc plates 7, 8 and the cam portion 6 is minimum (the torsion angle is approximately 0°) or is at neutral position.

Thus, in the cam portion 6 according to the present embodiment, its initial position is set such that one end portion 16a of the arm member 16 is in contact with the cam surface 6a having the small curvature when the torsion angle between the disc plates 7, 8 and the cam portion 6 is minimum.

In this torsional vibration damping device, the unitary rotation of the boss 5 and the cam portion 6 causes the position to vary at which one end portion 16a of the arm member 16 is in abutment with the cam surface 6a, which causes the arm member 16 to urge the spring seat 15, thereby changes a compression amount of the coil spring 4. At this time, the spring seat 15 moves to be close to or to be away from the pedestal 14.

In addition, the arm members 16 are arranged in point symmetrical relationship with respect to the central axis of the disc plates 7, 8, which allows the arm members 16 at the respective one end portions 16a thereof to be in contact with the cam surfaces 6a of the small curvature and being in opposed relationship with the central axis of the disc plates 7, 8 interposed therebetween

As shown in FIG. 2 and FIG. 4, the disc plate 8 is formed into a cylindrical configuration and its open end 8b of the disc plate 8 is fixed to the disc plate 7 by welding that is blackened (the welded area is referred to as "welded portion 19").

In detail, the disc plates 7, 8 are mounted on a radially outer peripheral portion of the boss 5 so as to surround the coil springs 4, arm members 16 and the cam portion 6, and a space 24 in which a grease 23 is accommodated is defined between the radially outer peripheral portion of the boss 5 and axially inner peripheral portions of the disc plates 7, 8.

The grease 23 serves for lubricating a contact region at which the one end portion 16a of the arm member 16, which is positioned on the inside in the radial direction, is in contact on the cam surface 6a and concurrently serves for lubricating a contact region at which the other end portion 16b of the arm member 16, which is positioned on the outside in the radial direction, is in contact on the spring seat 15.

As shown in FIG. 3, the grease 23 is accommodated in the space 24 such that the amount of the grease 23 take a specified rate relative to the volume of the space 24. It is to be noted that FIG. 3 illustrates the torsional vibration damping device 1 is at rest.

The amount of the grease 23 inhibits a sliding resistance of the arm member 16 to increase and concurrently satisfies for a sufficient lubrication at the contact region at which the one end portion 16a of the arm member 16 positioned on the inside in the radial direction is in contact with the cam surface 6a, even though the grease 23 is moved in the radially outward direction resulting from the centrifugal applied to the torsional vibration damping device 1.

The sealing member 25 is made up of an annular ring 27 and O-rings 29a, 29b which are mounted to the annular ring 27. The O-ring 29a is interposed between the annular ring 27 and the disc plate 7, while the O-ring 29b is interposed between the annular ring 27 and the boss 5.

The sealing member 26 is made up of an annular ring 28 and O-rings 30a, 30b which are mounted to the annular ring 28. The O-ring 30a is interposed between the annular ring 28 and the disc plate 8, while the O-ring 30b is interposed between the annular ring 28 and the boss 5.

Thus, between the disc plates 7, 8 and the boss 5 which are allowed to rotate relative to each other, close contact relationships are formed, which brings the space 24 into a hermetically sealed structure by the sealing member 25, 26, thereby preventing a leakage of the grease 23 to the outside of the space 24.

In addition, the boss 5 and the cam portion 6 are formed therein with a communication hole 31 and this communication hole 31 acts as an air hole through which the space 24 and its outside is in fluid communication. The communication hole 31 includes a first communication hole 31a and a second communication hole 31b, one end portion of the first communication hole 31a being in fluid communication with the outside of the space 24, the other end portion of the first communication hole 31a being extended along the same direction axial direction of the boss 5 and the cam portion 6, one end portion of the second communication hole 31b being in fluid communication with the other end portion of the first communication hole 31a, the second communication hole 31b being open toward a side surface 6b except for the cam surface 6a of the cam portion 6.

Next, an operation will be described.

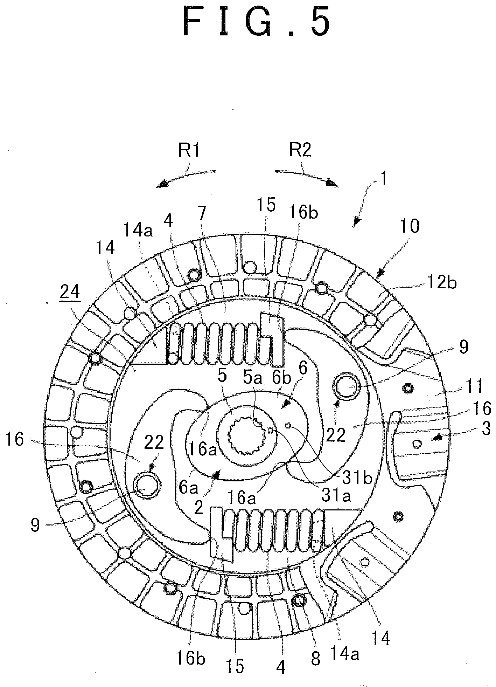

FIG. 5 to FIG. 7 indicates a condition in which the disc plates 7, 8 are rotated in the counter-clockwise direction (R1 direction) by receiving the torsional torque from the internal combustion engine and for convenience of explanation, the description of the operation will be made on the assumption that the cam portion 6 relative to the disc plates 7 twists in the clockwise direction (R2 direction) as a positive side and in the counterclockwise direction (R1 direction) as a negative side.

It is to be noted that in FIG. 5 to FIG. 7, each of the structures is illustrated with the disc plate 8 and the grease 23 removed. In addition, the twist of the cam portion 6 relative to the disc plates 7, 8 is assumed to be toward the positive side when the vehicle is in acceleration.

The friction materials 12a, 12b are pressed by the pressure plate to be brought into frictional engagement with the flywheel and the pressure plate, so that the rotational torque of the internal combustion engine is inputted to the disc plates 7, 8.

In the torsional vibration damping device 1 according to the present embodiment, when the relative rotation between the disc plates 7, 8 and the cam portion 6 is in a small condition, that is, when the torsion angle between the disc plates 7, 8 and the cam portion 6 is in a small condition as being in the vicinity of 0°, as shown in FIG. 3, the cam portion 6, which is positioned at its initial position, rotates with the disc plates 7, 8 as a unit.

At this time, the one end portion 16a of the arm member 16 is in contact with the cam surface 6a of the cam portion 6, the cam surface 6a being small in curvature, which causes the cam portion 6 to press the arm member 16 onto the spring seat 15, thereby urging the coil spring 4 by the cam portion 6.

Then, the resultant reaction force of the coil spring 4 causes the arm member 16 to swing about the rotation shaft 9, thereby pressing the cam portion 6 by leverage action. Therefore, the rotation torque of the disc plates 7, 8 is transmitted, via the coil spring 4 and the arm member 16, to the cam portion 6. Thus, the input shaft 21 of the transmission is in receipt of the rotation torque of the internal combustion engine and at this time the compression of the coil spring 4 gets smaller.

For this reason, the twist vibration between the disc plates 7, 8 and the cam portion 6 is absorbed to damp, with the power transmission of the internal combustion maintained from the disc plates 7, 8 to the cam portion 6.

On the other hand, in a case where the engine speed of the internal combustion engine is small due to the fact that its torque fluctuation is small when the vehicle is in acceleration, the torque fluctuation between the disc plates 7, 8 and the cam portion 6 is small and the cam portion 6 rotates in the clockwise direction (R2 direction) relative to the disc plates 7, 8.

At this time, in the transition from the condition shown in FIG. 3 to the condition shown in FIG. 5, as the torsion angle between the disc plates 7, 8 and the cam portion 6 gets larger and larger, the cam portion 6 is brought into rotation in the R2 direction relative to the disc plates 7, 8, which causes the one end portion 16a of the arm member 16 to slide along the cam surface 6a.

Due to the fact that curvature of the cam surface 6a is set to increase as the torsion angle between the disc plates 7, 8 and the cam portion 6 increases from the cam portion 6 being at its initial position, when the one end portion 16a of the arm member 16 is pressed by the cam surface 6a, whose curvature gradually increases, of the cam portion 6, the other end portion 16b of the arm member 16 is moved in both radially inward and circumferential directions of the disc plates 7, 8.

And, in accordance with the rotation of the cam portion 6 in the R2 direction relative to the disc plates 7, 8, the other end portion of the arm member 16 moves in the radially inward direction, thereby locating the spring seat 15 close to the pedestal 14.

In addition, causing the other end portion 16b of the arm member 16 to move along the circumferentially peripheral outer portion of the spring seat 15 makes it possible to prevent the other end portion 16b of the arm member 16 in the circumferential direction from not being obstructed. It is to be noted that FIG. 5 illustrates a condition in which the torsion angle between the disc plates 7, 8 and the cam portion 6 is + 45°.

In this way, the reaction force of the coil spring 4 resulted from the urging of the coil spring 4 causes the arm member 16 to swing about the rotation shaft 9, thereby pressing strongly the cam portion 6 by leverage action.

Thus, the twist vibration between the disc plates 7, 8 and the cam portion 6 is absorbed to damp, with the power transmission of the internal combustion maintained from the disc plates 7, 8 to the cam portion 6.

In a case of a further increase of the engine speed change of the internal combustion engine due to its torque fluctuation, the resultant fluctuation torque transmitted from the disc plates 7, 8 to the cam portion 6 is large, thereby causing the cam portion 6 to rotate further in the clockwise direction (R2 direction) relative to the disc plates 7, 8.

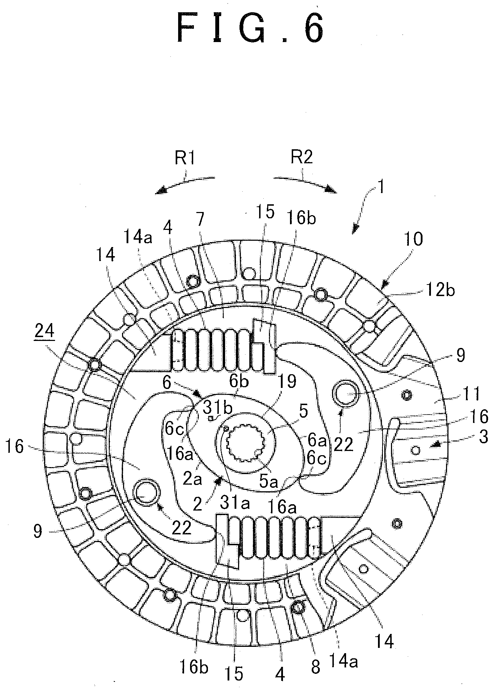

As the transition from the condition shown in FIG. 5 to a condition shown in FIG. 6 illustrates, when the torsion angle between the disc plates 7, 8 and the cam portion 6 reaches a value, for example, of a maximum or + 90°, the one end portion of the arm member 16 takes a position that is in coincidence with a top part 6c of the cam surface 6a at which the curvature is maximum, thereby causing the cam portion 6 to urge the coil spring 4 via the arm member 16 with an increased force.

As a result, the reaction force of the coil spring 4 gets larger with the result that the twist vibration between the disc plates 7, 8 and the cam portion 6 is absorbed to damp, with the power transmission from the internal combustion maintained from the disc plates 7, 8 to the cam portion 6.

In such a case, due to the fact that curvature of the cam surface 6a is set to increase as the torsion angle between the disc plates 7, 8 and the cam portion 6 increases from the cam portion 6 being at its initial position, when the one end portion 16 of the arm member 16 is pressed by the cam surface 6a, whose curvature gradually increases, of the cam portion 6, the other end portion 16b of the arm member 16 is moved in the radially inward direction of the disc plates 7, 8.

In this case, also, causing the other end portion 16b of the arm member 16 to move along the circumferentially peripheral portion of the spring seat 15 makes it possible to prevent the other end portion 16b of the arm member 16 in the circumferential direction from not being obstructed.

Furthermore, when the disc plates 7, 8 receive an excess torque from the internal combustion engine, the one end portion 16a of the arm member 16 overrides the top part 6c of the cam surface 6a at which the curvature is at maximum, which makes it possible to idle the disc plates 7, 8 relative to the cam portion 6, thereby allowing the cam portion 6 to act as a torque limiter when the vehicle is in acceleration.

As a result, it is possible to prevent the transmission of excess torque from the disc plates 7, 8 to the cam portion 6, allowing the transmission gear set of the transmission to be protected.

On the other hand, when the vehicle in deceleration, the driving torque of the internal combustion engine gets smaller and therefore an engine brake is generated, thereby inputting the rotational torque from the input shaft 21 of the transmission to the cam portion 6. In a case where the engine speed change of the internal combustion engine due to its torque fluctuation is small when the vehicle is in deceleration, the fluctuation torque between the cam portion 6 and the disc plates 7, 8 is small, which causes the cam portion 6 to twist in the negative side (R1 direction) relative to the disc plates 7, 8.

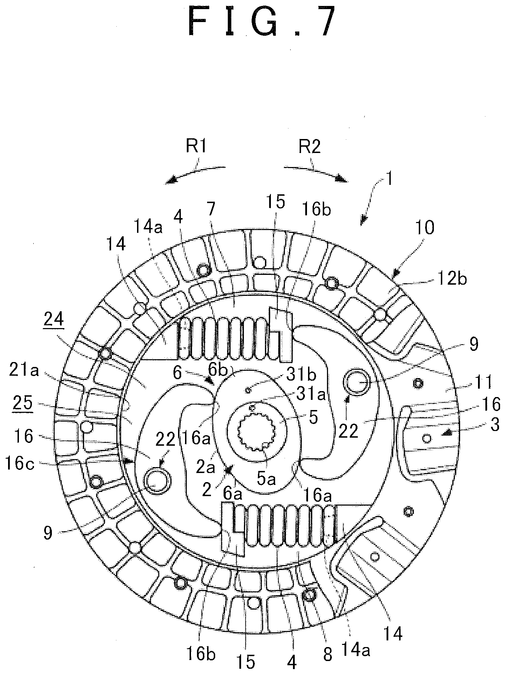

At this time, in the transition from the condition shown in FIG. 3 to the condition shown in FIG. 7, as the torsion angle between the disc plates 7, 8 and the cam portion 6 gets larger and larger upon relative rotation the disc plates 7, 8 and the cam portion 6, the cam portion 6 is brought into rotation, thereby causing the one end portion 16a of the arm member 16 to slide along the cam surface 6a.

Due to the fact that curvature of the cam surface 6a is set to increase as the torsion angle between the disc plates 7, 8 and the cam portion increases from the cam portion 6 being at its initial position, when the one end portion 16 of the arm member 16 is pressed by the cam surface 6a, whose curvature gradually increases, of the cam portion 6, the other end portion 16b of the arm member 16 is moved in both the radially inner and circumferential directions of the disc plates 7, 8.

And, in accordance with the rotation of the cam portion 6 in the counterclockwise direction (R1 direction) relative to the disc plates 7, 8, the other end portion 16b of the arm member 16 moves in the radially inward direction of the disc plates 7, 8, thereby locating the spring seat 15 close to the pedestal 14.

In addition, causing the other end portion 16b of the arm member 16 to move along the circumferentially peripheral portion of the spring seat 15 makes it possible to prevent the other end portion 16b of the arm member 16 in the circumferential direction from not being obstructed. It is to be noted that FIG. 7 illustrates a condition in which the torsion angle between the disc plates 7, 8 and the cam portion 6 is - 45°.

In this way, the reaction force of the coil spring 4 resulted from the urging of the coil spring 4 causes the arm member 16 to swing about the rotation shaft 9, thereby pressing strongly the cam portion 6 by leverage action.

Thus, the twist vibration between the disc plates 7, 8 and the cam portion 6 is absorbed to damp, with the power transmission from the internal combustion maintained from the disc plates 7, 8 to the cam portion 6.

Furthermore, when the cam portion 6 receives the excess torque from the internal combustion engine via the disc plates 7, 8, the one end portion 16a of the arm member 16 overrides the top part 6c of the cam surface 6a at which the curvature is maximum, which makes it possible to idle the disc plates 7, 8 relative to the cam portion 6, thereby allowing the cam portion 6 to act as a torque limiter.

As a result, when the vehicle is in acceleration, it is possible to prevent the transmission of excess torque from the disc plates 7, 8 to the cam portion 6, allowing the transmission gear set of the transmission to be protected.

In this way, the a torsional vibration damping device 1 according to the present embodiment is configured to include the pair of the disc plates 7, 8 which are so arranged on the axially opposite end side of the cam portion 6 as to be kept at a distance in the axial direction and which support the arm member 16 for rotation via the rotation shaft 9, and the pedestal 14 which supports the other end portion of the coil spring 4, the one end portion 16a of the cam portion 6 being in contact with the cam surface 6a of the cam portion 6, which makes it possible to widen the torsion angle between the cam portion 6 and the disc plates 7, 8, thereby reducing the rigidity of the coil spring 4.

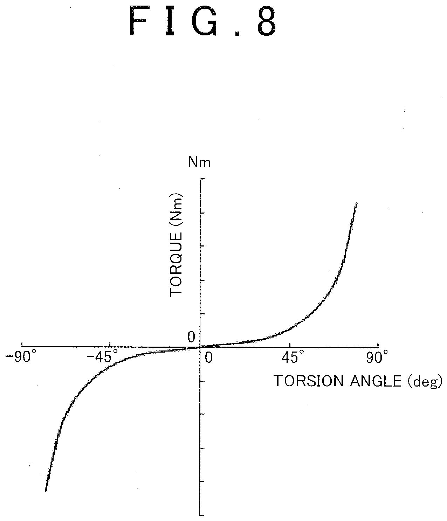

FIG. 8 is a view showing a relationship between a torsional characteristic between the torsion angle between the disc plates 7, 8 and cam portion 6, i.e., a graph for illustrating a relationship between the torsion angle between the disc plates 7, 8 and cam portion 6 and the output torque outputted from the cam portion 6.

An abscissa represents the torsion angle of the cam portion 6 relative to the disc plates 7, 8, while an ordinates represents the output torque outputted from the cam portion 6.

As shown in FIG. 8, in the present embodiment, as the torsion angle of the cam portion 6 relative to the disc plates 7, 8 increase, the coil spring 4 is compressed, thereby increasing the pressure force from the arm member 16 to the cam portion 6.

And, as the pressure force from the arm member 16 to the cam portion 6 gets larger, the output torque gets larger. The resulting change of the output torque at this time indicates a torsional characteristic traces a curved line which varies continuously. In the torsional vibration damping device 1 according to the present embodiment, it is possible to provide a wider torsion angle of 90° in each of the positive and negative sides.

It is to be noted that both the torsion characteristic and the measure of the torsion angle when the disc plates 7, 8 and the cam portion 6 are in relative rotation may be set to the desired torsion characteristic and the torsion angle (for example, 180° in total of the values of the positive and negative sides) by adjusting the shape of the cam surface 6a of the cam portion 6, the spring constant of the coil spring 4, the shape of the arm member 16, and other factor.

For this reason, in a range in which the torsion angle between the cam portion 6 and the disc plates 7, 8 is small, when, for example, the internal combustion engine is in idling condition due to the fact that the shift position is at the neutral position, it is possible for the coil spring 4 of low rigidity to damp a small vibration, thereby suppressing the rattling noise.

In addition in a rage in which the torsion angle between the cam portion 6 and the disc plates 7, 8 is large, increasing the torsion angle between the cam portion 6 and the disc plates 7, 8 makes it possible to obtain a high rigid torsion characteristic which provides an enlargement of the increase rate of the torque.

Thus, it is possible to damp the large torsional vibration originated from engine speed change caused by the torque fluctuation in the internal combustion engine, and the torsional resonance in the drive train system, thereby suppressing the rattling noise caused when idling gears in the transmission gear set get collided and the muffled noise resulted from the torsional resonance in the drive train system.

On the other hand, in the a torsional vibration damping device 1 according to the present embodiment, the disc plates 7, 8 are mounted on a radially outer peripheral portion of the boss 5 so as to surround the coil springs 4, arm members 16 and the cam portion 6, thereby defining the space 24 in which the grease 23 is accommodated between the radially outer peripheral portion of the boss 5 and axially inner peripheral portions of the disc plates 7, 8, and the sealing members 25, 26 are interposed between the radially outer peripheral portion of the boss 5 and the radially inner peripheral portions of the disc plates 7, 8.

Thereby, it is possible to bring the space 24 into the hermetically sealed structure by the sealing member 25, 26, which allows the grease 23 accommodate the in the space 24 to lubricate contact region between the one end portion 16a of the arm member 16 and the cam surface 6a of the cam portion 6 and the contact region between the other end portion 16b of the arm member 16 and the spring seat 15.

Consequently, it is possible to prevent abrasion, searing, and the like of both the contact region between the one end portion 16a of the arm member 16 and the cam surface 6a and the contact region between the other end portion 16b of the arm member 16 and the spring seat 15.

In addition, the space 24 is held in the hermetically sealed state by use of the sealing members 25, 26, which prevents entry of foreign matter in the space 24, resulting in that the foreign matter is not allowed to enter the contact region between the one end portion 16a of the arm member 16 and the cam surface 6a of the cam portion 6 and the contact region between the other end portion 16b of the arm member 16 and the spring seat 15, whereby the sliding region between the one end portion 16a of the arm member 16 and the cam surface 6a and the sliding region between the other end portion 16b of the arm member 16 and the spring seat 15 are capable of being free from partial wear or the like.

On the other hand, in a case where the clutch disc 10 is brought into engagement with the flywheel at the driving source side upon starting or shifting of the vehicle, the resulting friction between the flywheel and the clutch disc 10 causes the temperature of the torsional vibration damping device 1 to have a high temperature.

If the temperature in the space 24 increases, the resulting pressure rise in the space 24 may cause the grease 23 to leak out of the space 24. In the present embodiment, the boss 5 and the cam portion 6 are formed therein with the communication hole 31 for establishing a fluid communication between the space 24 and the outside of the space 24, which makes it possible for the space 24 to communicate with the outside thereof i.e., the outside air via the communication hole 31, resulting in that a pressure is established balance between the space 24 and the outside air. Thereby, the pressure in the space 24 is reduced, which will prevent the grease 23 from leaking out of the space 24.

Concurrently, due to the fact that when the torsional vibration damping device 1 is brought into rotation, the resulting centrifugal force causes the grease 23 to move in the radially outward direction and therefore forming the communication hole 31 in an outside of the radial direction may cause the grease 23 to leak from the communication hole 31.

In the torsional vibration damping device 1 according to the present embodiment, the communication hole 31 is formed in the boss 5 and the cam portion 6 which are located at an inside of the radial direction, which makes it possible to prevent surely the grease 23 from leaking by centrifugal force from the communication hole 31. For this reason, it is possible to prevent the decrease of the amount of the grease 23 in the space 24, whereby degradation of the lubricating performance at the contact region between the one end portion 16a of the arm member 16 and the cam surface 6a of the cam portion 6.

In particular, the communication hole 31 of the present embodiment includes the first communication hole 31a and the second communication hole 31b, one end portion of the first communication hole 31a being in fluid communication with the outside of the space 24, the other end portion of the first communication hole 31a being extended along an axial direction of the boss 5, one end portion of the second communication hole 31b being in fluid communication with the other end portion of the first communication hole 31a, the second communication hole 31b being open toward the side surface 6b except for the cam surface 6a of the cam portion 6.

In this way, bringing the other portion of the second communication hole 31b to be open toward the side surface 6b of the cam portion 6 except for the cam surface 6a of the cam portion 6 makes it possible to prevent the other portion of the second communication hole 31b from being closed by the one end portion 16a of the arm member 16. In addition, in a case of entrance of the grease 23 into the second communication hole 31b, the resulting grease 23 can be excluded therefrom by the centrifugal force applied to the torsional vibration damping device 1.

As a result, the fluid communication can be assured between the space 24 and the outside air, which makes it to prevent a degradation of aeration performance of the inside of the space 24.

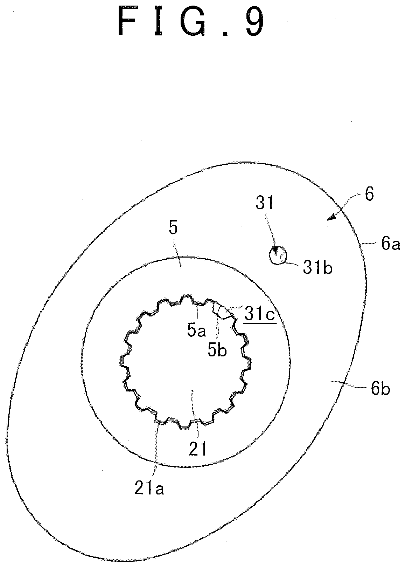

It is to be noted that, in the present embodiment, the first communication hole 31a is formed in the boss 5, however this is not limited thereto. For example, as shown in FIG. 9, a toothless portion 5b is formed by cutting out one of teeth of the inner peripheral spline 5a of the boss 5, it is possible to constitute the first communication hole 31c which is in fluid communication with the second communication hole 31b by utilizing such a toothless portion 5b.

In such a way, it is possible to machine the second communication hole 31b to be in fluid communication with the first communication hole 31c with ease, resulting in that it is possible to machine the communication hole 31 in an easy way. It is to be noted that the toothless portion may be formed in the outer peripheral spline 21a of the input shaft 21 instead of the inner peripheral spline 5a of the boss 5.

In addition, in the present embodiment, the grease 23 is capable of lubricating the contact region between the one end portion 16a of the arm member 16 and the cam surface 6a of the cam portion 6 and the contact region between the other end portion 16b of the arm member 16 and the spring seat 15.

For this reason, it is unnecessary to provide a ball bearing or the like for the decrease of sliding friction at each the one end portion 16a and the other end portion 16b of the arm member 16, which makes it possible to produce the arm member 16 in an easy way and concurrently to lighten the torsional vibration damping device 1.

It is to be noted that, in the present embodiment, the disc plate 8 is connected at its open end 8b to the disc plate 7 by the welded portion 19, however this is not limited thereto and the open end 8b may be adhered, via a sealing member, to the disc plate 7.

As described above, the torsional vibration damping device according to the present invention, which provides the effect of the prevention of abrasion, searing, and the like of a contact region between one end portion of an arm member and a cam surface by lubricating the contact region, is suitable as, for example, a torsional vibration damping device which is interposed between an internal combustion engine of a vehicle and a drive train system to connect for relative rotation between a first rotation member and a second rotation member via the arm member and the resilient member in order for allowing a rotational torque to transmit between the first rotation member and the second rotation member.

### EXPLANATION OF REFERENCE CODES

1/ TORSIONAL VIBRATION DAMPING DEVICE
2/ FIRST ROTATION MEMBER
3/ SECOND ROTATION MEMBER
4/ COIL SPRING (RESILIENT MEMBER)
5/ BOSS (FIRST ROTATION MEMBER)
5A/ INNER PERIPHERAL SPLINE
5B/ TOOTHLESS PORTION
6/ CAM PORTION
6A/ CAM SURFACE
6B/ SIDE SURFACE
7, 8/ DISC PLATE (SECOND ROTATION MEMBER)
9/ ROTATION SHAFT (ROTATION FULCRUM PORTION)
16/ARM MEMBER
16A/ ONE END PORTION
16B/ THE OTHER END PORTION
21/ INPUT SHAFT (SHAFT MEMBER)
21A/ OUTER PERIPHERAL SPLINE
23/ GREASE (LUBRICANT)
24/ SPACE
31/ COMMUNICATION HOLE
31A, 31C/ FIRST COMMUNICATION HOLE
31B/ SECOND COMMUNICATION HOLE

## Claims

1. A torsional vibration damping device, comprising:
a first rotation member (2);
a second rotation member (3) arranged at a radially outside of the first rotation member;
at least one or more resilient members (4) disposed between the first rotation member and the second member, the at least one or more resilient members being deformed resiliently between the first rotation member and the second member upon relative rotation between the first rotation member and the second rotation member;
a cam portion (6) arranged on a radially outer peripheral portion of the first rotation member and having a cam surface (6a) that is configured to vary its curvature along its circumferential direction; and
an arm member (16) whose one end portion is in contact with an outer peripheral portion of the cam portion, the other end portion being urged by the resilient member, the arm member being brought into rotation about a rotation fulcrum formed on the second rotation member to deform the resilient member resiliently upon the relative rotation between the first rotation member and the second rotation member, the rotation of the arm member allowing for transmission of a rotational torque between the first rotation member and the second rotation member,
the arm member being interposed, as only one arm member, between the first rotation member and the one resilient member,
**characterized in that**
the second rotation member, which is arranged at the radially outside of the first rotation member, surrounds the resilient member, the arm member, and the cam portion, thereby defining a space (24) in which a lubricant is accommodated between a radially outer peripheral portion of the first rotation member and an axially inner peripheral portion of the second rotation member,
a sealing member (25) is interposed between a radially inner peripheral portion of the second rotation member and the radially outer peripheral portion of the first rotation member, and
the first rotation member and the cam member are formed therein with a communication hole (31) for establishing a fluid communication between the space and an outside of the space.

2. The torsional vibration damping device according to claim 1, **characterized in that** the communication hole is formed by including a first communication hole (31a) and a second communication hole (31b), one end portion of the first communication hole being in fluid communication with the outside of the space, the other end portion of the first communication hole being extended along an axial direction of the first rotation member, one end portion of the second communication hole being in fluid communication with the other end portion of the first communication hole, the other end portion of the second communication hole being open toward a side surface (6b) of the cam portion except for the cam surface of the cam portion.

3. The torsional vibration damping device according to claim 2, **characterized in that** the first rotational member is formed at its inner peripheral portion with an inner peripheral spline (5a) for engagement with an outer peripheral spline (21a) of a shaft member, and a toothless portion (5b) is so formed by cutting out some of the spline teeth of either one of the outer peripheral spline and the inner peripheral spline to constitute the first communication hole.

4. The torsional vibration damping device according to any one of claims 1 to 3, **characterized in that** the second rotation member is formed so as to include a pair of disc plates (7, 8), the pair of the disc plates being placed at axially opposite end sides of the cam portion, the arm member, and the resilient member, the pair of the disc plates being connected with each other in axially spaced manner, the pair of the disc plates supporting the arm member for rotation via a rotation shaft (9) that constitutes the rotation fulcrum portion,
the first rotation member has a boss (5) whose outer circumferential portion has the cam portion, and
the seal member is interposed between the radially inner peripheral portions of the pair of the disc plates and a radially outer peripheral portion of the boss.

5. The torsional vibration damping device according to any one of claims 1 to 4, **characterized in that** the first rotation member is connected with an input shaft of a transmission involved in a drive transmission system, while the second rotation member is transmitted with a rotational torque of an internal combustion engine.

## Patentansprüche

1. Vorrichtung zur Dämpfung von Torsionsschwingungen, umfassend:
ein erstes Drehelement (2);
ein zweites Drehelement (3), angeordnet an einer radialen Außenseite des ersten Drehelements;
mindestens ein oder mehrere elastische Elemente (4), angeordnet zwischen dem ersten Drehelement und dem zweiten Drehelement, wobei das mindestens eine oder die mehreren elastischen Elemente bei einer relativen Drehung zwischen dem ersten Drehelement und dem zweiten Drehelement elastisch zwischen dem ersten Drehelement und dem zweiten Drehelement verformt werden;
einen Nockenabschnitt (6), angeordnet an einem radial äußeren peripheren Abschnitt und aufweisend eine Nockenoberfläche (6a), die dazu ausgelegt ist, ihre Wölbung entlang ihrer Umfangsrichtung zu verändern; und
ein Armelement (16), dessen einer Endabschnitt in Kontakt mit einem äußeren peripheren Abschnitt des Nockenabschnitts ist, wobei der andere Endabschnitt von dem elastischen Element vorangetrieben wird, das Armelement in Drehung um einen Drehpunkt gebracht wird, der an dem zweiten Drehelement ausgebildet ist, um bei der relativen Drehung zwischen dem ersten Drehelement und dem zweiten Drehelement das elastische Element elastisch zu verformen, wobei die Drehung des Armelements eine Übertragung eines Drehmoments zwischen dem ersten Drehelement und dem zweiten Drehelement gestattet,
wobei das Armelement als nur ein Armelement zwischen dem ersten Drehelement und dem einen elastischen Element zwischengeschaltet ist,
**dadurch gekennzeichnet, dass**
das zweite Drehelement, das an der radial äußeren Seite des ersten Drehelements angeordnet ist, das elastische Element, das Armelement und den Nockenabschnitt umgibt und dabei einen Raum (24) definiert, in dem zwischen einem radial äußeren peripheren Abschnitt des ersten Drehelements und einem axialen inneren peripheren Abschnitt des zweiten Drehelements ein Schmiermittel untergebracht ist,
ein Dichtelement (25) zwischen einem radial inneren peripheren Abschnitt des zweiten Drehelements und dem radial äußeren peripheren Abschnitt des ersten Drehelements zwischengeschaltet ist, und
das erste Drehelement und das Nockenelement darin mit einem Austauschloch (31) zum Etablieren eines Fluidaustauschs zwischen dem Raum und einer Außenseite des Raums ausgebildet sind.

2. Vorrichtung zur Dämpfung von Torsionsschwingungen nach Anspruch 1, **dadurch gekennzeichnet, dass** das Austauschloch ausgebildet wird durch Einbeziehen eines ersten Austauschlochs (31a) und eines zweiten Austauschlochs (31b), wobei sich ein Endabschnitt des ersten Austauschlochs in einem Fluidaustausch mit der Außenseite des Raumes befindet, sich der andere Endabschnitt des ersten Austauschlochs entlang einer axialen Richtung des ersten Drehelements erstreckt, sich ein Endabschnitt des zweiten Austauschlochs in einem Fluidaustausch mit dem anderen Endabschnitt des ersten Austauschlochs befindet, der andere Endabschnitt des zweiten Austauschlochs in Richtung einer seitlichen Fläche (6b) des Nockenabschnitts offen ist, mit Ausnahme der Nockenoberfläche des Nockenabschnitts.

3. Vorrichtung zur Dämpfung von Torsionsschwingungen nach Anspruch 2, **dadurch gekennzeichnet, dass** das erste Drehelement an seinem inneren peripheren Abschnitt mit einer inneren peripheren Kerbverzahnung (5a) zum Herstellen eines Eingriffs mit einer äußeren peripheren Kerbverzahnung (21a) eines Wellenelements ausgebildet ist, und ein zahnloser Abschnitt (5b) so durch Ausschneiden einiger der Kerbzähne aus einer von der äußeren peripheren Kerbverzahnung und der inneren peripheren Kerbverzahnung ausgebildet wird, um das erste Austauschloch zu bilden.

4. Vorrichtung zur Dämpfung von Torsionsschwingungen nach einem der Ansprüche 1 bis 3, **dadurch gekennzeichnet, dass** das zweite Drehelement so ausgebildet ist, dass es ein Paar von Scheibenplatten (7, 8) beinhaltet, wobei das Paar der Scheibenplatten an axial gegenüberliegenden Endseiten des Nockenabschnitts, des Armelements und des elastischen Elements ausgebildet ist, wobei das Paar der Scheibenplatten miteinander in einer axial beabstandeten Weise verbunden ist, wobei das Paar der Scheibenplatten das Armelement für eine Drehung über eine Drehwelle (9) stützt, die den Drehpunktabschnitt bildet,
das erste Drehelement einen Sockel (5) aufweist, dessen äußerer Umfangsabschnitt den Nockenabschnitt aufweist, und
das Dichtungselement zwischen den radial inneren peripheren Abschnitten des Paares der Scheibenplatten und einem radial äußeren peripheren Abschnitt des Sockels zwischengeschaltet ist.

5. Vorrichtung zur Dämpfung von Torsionsschwingungen nach einem der Ansprüche 1 bis 4, **dadurch gekennzeichnet, dass** das erste Drehelement mit einer Eingangswelle einer Übertragung verbunden ist, die in ein Antriebsübertragungssystem eingebunden ist, während das zweite Drehelement mit einem Drehmoment eines Verbrennungsmotors übertragen wird.

## Revendications

1. Dispositif d'amortissement de vibrations de torsion, comprenant :
un premier organe de rotation (2) ;
un deuxième organe de rotation (3) agencé radialement à l'extérieur du premier organe de rotation ;
au moins un ou plusieurs organes élastiques (4) disposés entre le premier organe de rotation et le deuxième organe, l'au moins un ou les plusieurs organes élastiques étant déformés élastiquement entre le premier organe de rotation et le deuxième organe lors de la rotation relative entre le premier organe de rotation et le deuxième organe de rotation ;
une partie de came (6) agencée sur une partie périphérique radialement extérieure du premier organe de rotation et comportant une surface de came (6a) qui est configurée de manière à changer de courbure le long de sa direction circonférentielle ; et
un organe de bras (16) dont l'une des parties d'extrémité est en contact avec une partie périphérique extérieure de la partie de came, l'autre partie d'extrémité étant sollicitée par l'organe élastique, l'organe de bras étant amené en rotation autour d'un pivot de rotation formé sur le deuxième organe de rotation pour déformer élastiquement l'organe élastique lors de la rotation relative entre le premier organe de rotation et le deuxième organe de rotation, la rotation de l'organe de bras permettant la transmission d'un couple rotationnel entre le premier organe de rotation et le deuxième organe de rotation,
l'organe de bras étant interposé, en tant que seulement un organe de bras, entre le premier organe de rotation et l'organe élastique,
**caractérisé en ce que**
le deuxième organe de rotation, lequel est agencé radialement à l'extérieur du premier organe de rotation, entoure l'organe élastique, l'organe de bras et la partie de came, en définissant ainsi un espace (24) dans lequel un lubrifiant est reçu entre une partie périphérique radialement extérieure du premier organe de rotation et une partie périphérique axialement intérieure du deuxième organe de rotation,
un organe d'étanchéité (25) est interposé entre une partie périphérique radialement intérieure du deuxième organe de rotation et la partie périphérique radialement extérieure du premier organe de rotation et
le premier organe de rotation et l'organe de came sont pourvus d'un trou de communication (31) pour établir une communication fluidique entre l'espace et l'extérieur de l'espace.

2. Dispositif d'amortissement de vibrations de torsion selon la revendication 1, **caractérisé en ce que** le trou de communication est formé de manière à comporter un premier trou de communication (31a) et un deuxième trou de communication (31b), une partie d'extrémité du premier trou de communication étant en communication fluidique avec l'extérieur de l'espace, l'autre partie d'extrémité du premier trou de communication s'étendant le long d'une direction axiale du premier organe de rotation, une partie d'extrémité du deuxième trou de communication étant en communication fluidique avec l'autre partie d'extrémité du premier trou de communication, l'autre partie d'extrémité du deuxième trou de communication étant ouverte en direction d'une surface latérale (6b) de la partie de came à l'exception de la surface de came de la partie de came.

3. Dispositif d'amortissement de vibrations de torsion selon la revendication 2, **caractérisé en ce que** le premier organe rotatif est pourvu, sur sa partie périphérique intérieure, d'une cannelure périphérique intérieure (5a) destinée à venir en prise avec une cannelure périphérique extérieure (21a) de l'organe d'arbre, et une partie non dentée (5b) est formée en découpant certaines dents de cannelure de l'une ou l'autre parmi la cannelure périphérique extérieure et la cannelure périphérique intérieure pour constituer le premier trou de communication.

4. Dispositif d'amortissement de vibrations de torsion selon l'une quelconque des revendications 1 à 3, **caractérisé en ce que** le deuxième organe de rotation est formé de manière à comporter une paire de plaques formant disques (7, 8), la paire de plaques formant disques étant placées sur des côtés d'extrémité axialement opposés de la partie de came, de l'organe de bras et de l'organe élastique, la paire de plaques formant disques étant reliées l'une à l'autre de manière espacée axialement, la paire de plaques formant disques supportant l'organe de bras pour la rotation par le biais d'un arbre de rotation (9) qui constitue la partie de pivot de rotation,
le premier organe de rotation comporte une protubérance (5) dont la partie circonférentielle extérieure comporte la partie de came et
l'organe d'étanchéité est interposé entre les parties périphériques radialement intérieures de la paire de plaques formant disques et une partie périphérique radialement extérieure de la protubérance.

5. Dispositif d'amortissement de vibrations de torsion selon l'une quelconque des revendications 1 à 4, **caractérisé en ce que** le premier organe de rotation est relié à un arbre d'entrée d'une transmission associée à un système de transmission d'entraînement, tandis qu'un couple rotationnel d'un moteur à combustion interne est transmis au deuxième organe de rotation.
